# EUROPEAN PATENT APPLICATION

(11) **EP 4 614 583 A1**
(43) Date of publication of application: **10.09.2025**
(21) Application number: 23787367.4
(22) Date of filing: 16.01.2023
(51) Int. Cl.: H01M 4/131, H01M 4/136, H01M 10/0525, H01M 4/04

(54) **POSITIVE ELECTRODE PIECE, PREPARATION METHOD THEREFOR, AND APPLICATION THEREOF**

(30) Priority: 29.12.2022 CN 202211711261
(71) Applicant: Eve Power Co., Ltd., Jingmen, Hubei 448000 (CN)
(72) Inventor: SUN, Xiaodan, Jingmen, Hubei 448000 (CN); HU, Qi, Jingmen, Hubei 448000 (CN); ZENG, Hanmin, Jingmen, Hubei 448000 (CN); HE, Wei, Jingmen, Hubei 448000 (CN); LIU, Jincheng, Jingmen, Hubei 448000 (CN)
(74) Representative: Herrero & Asociados, S.L.
(86) International application number: PCT/CN2023/072406
(87) International publication number: WO 2023/197719

(57) **Abstract**

The present disclosure provides a positive electrode sheet, a method for preparing the positive electrode sheet, and an application of the positive electrode sheet. The positive electrode sheet includes a current collector and an electrode layer arranged on at least one side of the current collector. The electrode layer includes at least a first active material layer and a second active material layer which are arranged in a stacked manner. The first active material layer is in direct contact with a surface of the current collector. An active material in the first active material layer includes a layered oxide positive electrode material, and an active material in the second active material layer includes a manganese-based positive electrode material. The positive electrode sheet provided in the present disclosure improves electronic conductivity of the manganese-based positive electrode material while synergistically cooperating with the layered oxide positive electrode material to enhance safety performance of a battery, improve long-cycle performance of the battery, and fully leverage advantages of both the manganese-based positive electrode material and the layered oxide positive electrode material, making charge/discharge curve smoother and facilitating BMS calculations.

## Description

This application claims the priority of Chinese Patent Application No. 202211711261.5, filed with the China National Intellectual Property Administration on December 29, 2022, the disclosure of which is hereby incorporated by reference in their entireties.

### TECHNICAL FIELD

The present disclosure belongs to the technical field of lithium-ion batteries and relates to a positive electrode sheet, a method for preparing the positive electrode sheet, and an application of the positive electrode sheet.

### BACKGROUND

Positive electrode materials play a crucial role in lithium-ion batteries, such as manganese-based positive electrode materials and layered oxide positive electrode materials.

Lithium manganese iron phosphate positive electrode materials have poor conductivity, and polarization continuously increases during the cycling process, thereby affecting battery's cycle life. To improve electronic conductivity and reduce ohmic impedance, carbon-coated aluminum foil is generally used for lithium manganese iron phosphate positive electrodes coating. However, the use of carbon-coated aluminum foil increases costs and is not suitable for large-scale production. For example, a Chinese patent application (with publication number CN113410427A) provides a positive electrode sheet, a method for preparing the same, and an application of the same, including a positive electrode current collector, a carbon coating layer, and a positive electrode active material layer. The carbon coating layer is coated on at least one surface of the positive electrode current collector, and the positive electrode active material layer is coated on a side of the carbon coating layer away from the positive electrode current collector. The positive electrode active material includes lithium manganese iron phosphate, a lithium manganate material, and a lithium-rich manganese-based positive electrode material.

Layered oxide materials, with a high charge/discharge voltage, high specific capacity, and low cost, have become the most promising lithium-ion battery positive electrode material. However, layered oxide materials inevitably have many defects, such as cation mixing and increased nickel content, which lead to lower thermal stability, microcracks during charge/discharge, high surface residual alkali, and poor cycling performance.

Currently, some researchers mix lithium manganese iron phosphate and layered oxide materials to prepare a mixed slurry for coating, resulting in a lithium manganese iron phosphate-layered oxide mixed electrode. For example, a Chinese patent application (with publication number CN108777298A) discloses a positive electrode material including lithium manganese iron phosphate and a ternary material, where the ternary material is lithium nickel cobalt manganese oxide and/or lithium nickel cobalt aluminum oxide. The purpose is to leverage advantages of both lithium manganese iron phosphate and layered oxide materials to improve the conductivity of lithium manganese iron phosphate and enhance safety of the layered oxide materials. However, the lithium manganese iron phosphate-layered oxide mixed electrodes obtained by the above-mentioned method have issues such as poor coating effects, uneven distribution of lithium manganese iron phosphate and layered oxide materials, and unsatisfactory safety improvements.

At the same time, to address the issue of layered oxide material failure during long cycling, it is necessary to develop a high-safety layered oxide material application system to improve thermal stability of layered oxide materials and reduce thermal runaway caused by thermal failure.

Therefore, how to improve long-cycle performance and conductivity of a lithium-ion battery positive electrode system while enhancing safety performance without significantly increasing production costs is a technical problem that needs to be solved urgently.

### SUMMARY

The following is a summary of the subject matter described in detail herein. This summary is not intended to limit the scope of the claims.

An objective of the present disclosure is to provide a positive electrode sheet, a method for preparing the positive electrode sheet, and an application of the positive electrode sheet. The positive electrode sheet provided in the present disclosure improves electronic conductivity of manganese-based positive electrode materials while synergistically cooperating with layered oxide positive electrode materials to enhance safety performance of a battery, improve long-cycle performance of the battery, and fully leverage advantages of both manganese-based positive electrode materials and layered oxide positive electrode materials, making charge/discharge curve smoother and facilitating BMS calculations.

To achieve this objective, the present disclosure adopts the following technical solutions.

**In** a first aspect, the present disclosure provides a positive electrode sheet. The positive electrode sheet includes a current collector and an electrode layer arranged on at least one side of the current collector. The electrode layer includes at least a first active material layer and a second active material layer which are arranged in a stacked manner, with the first active material layer in direct contact with a surface of the current collector. An active material in the first active material layer includes a layered oxide positive electrode material, and an active material in the second active material layer includes a manganese-based positive electrode material.

The positive electrode sheet provided in the present disclosure improves the electronic conductivity of manganese-based positive electrode material while synergistically cooperating with the layered oxide positive electrode material to enhance the safety performance of the battery, improve the long-cycle performance of the battery, and fully leverage the advantages of both manganese-based positive electrode material and layered oxide positive electrode material, making the charge/discharge curve smoother and facilitating BMS calculations.

In some embodiments, the current collector includes a bare foil and a coating on a surface of the bare foil.

In other embodiments of the present disclosure, the current collector may also be implemented without using a coated structure, which can save costs. However, the use of a coated current collector can further improve conductivity of the positive electrode sheet.

In some embodiments, the coating includes a carbon coating layer, and a material in the carbon coating layer includes at least one selected from the group consisting of conductive carbon black, graphene, and carbon nanotubes.

In some embodiments, the layered oxide positive electrode material includes at least one of a material with a chemical formula of LiₐNiₓCo_{y}M_{1-x-y}O₂ and a material with a chemical formula of zLi₂MnO₃·(1-z)LiBO₂. In detail, M includes at least one selected from the group consisting of Al, Mn, Fe, Cu, Zn, Zr, Mg, W, V, Nb, Sr, K, Na, and Ti, 1≤a≤2, 0.2≤x≤1, 0≤y<1, B includes at least one selected from the group consisting of Mn, Ni, and Co, and 0<z<1. For example, a can be 1, 1.1, 1.2, 1.3, 1.4, 1.5, 1.6, 1.7, 1.8, 1.9, or 2, etc., x can be 0.2, 0.3, 0.4, 0.5, 0.6, 0.7, 0.8, 0.9, or 1, etc., y can be 0.1, 0.2, 0.3, 0.4, 0.5, 0.6, 0.7, 0.8, or 0.9, etc., and z can be 0.2, 0.3, 0.4, 0.5, 0.6, 0.7, 0.8, or 0.9, etc.

In some embodiments, D50 of the layered oxide positive electrode material is in a range of 1 µm-30 µm, for example, 1 µm, 1.1 µm, 1.5 µm, 2 µm, 5 µm, 10 µm, 15 µm, 20 µm, 25 µm, or 30 µm, etc.

In some embodiments, the manganese-based positive electrode material includes at least one selected from the group consisting of LiMnₓFe_{y}A_{(1-x-y)}PO₄, zLi₂MnO₃·(1-z)LiCO₂, and LiMn₂O₄. In detail, 0≤x≤1, 0≤y≤1, A includes at least one selected from the group consisting of Al, Cu, Zn, Zr, Mg, W, V, Nb, Sr, K, Na, Ti, Y, S, F, N, and Cl, C includes at least one selected from the group consisting of Mn, Ni, and Co, and 0<z<1. For example, x can be 0, 0.1, 0.2, 0.3, 0.4, 0.5, 0.6, 0.7, 0.8, 0.9, or 1, etc., y can be 0, 0.1, 0.2, 0.3, 0.4, 0.5, 0.6, 0.7, 0.8, 0.9, or 1, etc., and z can be 0.2, 0.3, 0.4, 0.5, 0.6, 0.7, 0.8, or 0.9, etc.

In some embodiments, the chemical formula zLi₂MnO₃·(1-z)LiBO₂ in the layered oxide positive electrode material and the chemical formula zLi₂MnO₃·(1-z)LiCO₂ in the manganese-based positive electrode material are adjusted for distinction and can essentially represent a same substance. Other chemical formulas are also adjusted for distinction, and the letters merely represent chemical elements without any other implications.

In some embodiments, the electrode layer is a Type I electrode layer. The active material in the first active material layer is the layered oxide positive electrode material, and the active material in the second active material layer is the manganese-based positive electrode material.

In some embodiments, in the Type I electrode layer, a ratio of an areal density of the active material in the second active material layer to an areal density of the active material in the first active material layer is in a range of 0.01-100, for example, 0.01, 0.05, 0.1, 0.5, 1, 5, 10, 15, 20, 25, 30, 35, 40, 45, 50, 55, 60, 65, 70, 75, 80, 85, 90, 95, or 100, etc., particularly in a range of 0.1-20.

In some embodiments, in the Type I electrode layer, when the ratio of the areal density of the active material in the second active material layer to the areal density of the active material in the first active material layer is within the range of 0.1-20, the use of the layered oxide positive electrode material can solve a problem of poor ionic conductivity of the manganese-based positive electrode material, and there is no need to use the carbon-coated aluminum foil, reducing costs. The manganese-based positive electrode material in the second active material layer provides a coating effect on the layered oxide positive electrode material and reduces thermal diffusion, while also reducing kinetic characteristics of the active material layer of the first active material layer, preventing structural degradation of the layered oxide positive electrode material during cycling. When the areal density ratio, i.e., the ratio of the areal density of the active material in the second active material layer to the areal density of the active material in the first active material layer, exceeds 20, ionic conductivity of the layered oxide positive electrode material in the second active material layer may be affected, making it impossible to reduce electrode impedance and improve electrode ionic conductivity, which is not conducive to stability of electronic conductivity in later stages of cycling. When the areal density ratio is less than 0.1, the manganese-based positive electrode material may not effectively isolate and coat the layered oxide positive electrode material, affecting overall safety performance.

In some embodiments, in the Type I electrode layer, a ratio of a thickness of the second active material layer to a thickness of the first active material layer is in a range of 0.01-200, for example, 0.01, 0.05, 0.1, 0.5, 1, 5, 10, 15, 20, 25, 30, 35, 40, 45, 50, 55, 60, 65, 70, 75, 80, 85, 90, 95, 100, 110, 120, 130, 140, 150, 160, 170, 180, 190, or 200, etc., particularly in a range of 0.1-40.

In some embodiments, in the Type I electrode layer, keeping the ratio of the thickness of the second active material layer to the thickness of the first active material layer within the range of 0.1-40 is beneficial to fully leverage good ionic conductivity of the layered oxide positive electrode material and safety characteristics of the manganese-based positive electrode material, ensuring good specific capacity performance and long-cycle and safety performance of the electrode. When the thickness ratio, i.e., the ratio of the thickness of the second active material layer to the thickness of the first active material layer, exceeds the range of 0.1-40, maintaining good ionic conductivity of the layered oxide positive electrode material in the first active material layer becomes challenging, affecting specific capacity and long-cycle performance of the active material. A thickness ratio below the range of 0.1-40 may result in inadequate coating and isolation of the layered oxide positive electrode material in the first active material layer by the of the manganese-based positive electrode material of the second active material layer, compromising safety performance.

In some embodiments, in the Type I electrode layer, a ratio of a specific surface area BET2 of the active material in the second active material layer to a specific surface area BET1 of the active material in the first active material layer satisfies 0.01≤BET2/BET1≤150, for example, the ratio can be 0.01, 0.05, 0.1, 0.5, 1, 5, 10, 15, 20, 25, 30, 35, 40, 45, 50, 55, 60, 65, 70, 75, 80, 85, 90, 95, 100, 110, 120, 130, 140, or 150, etc., and particularly 2.1≤BET2/BET1≤60.

In some embodiments, the electrode layer is a Type II electrode layer. The active material in the first active material layer includes the layered oxide positive electrode material, and the active material in the second active material layer includes the manganese-based positive electrode material and the layered oxide positive electrode material.

In the embodiments provided in the present disclosure, in the Type II electrode layer, when the second active material layer includes both the manganese-based positive electrode material and layered oxide positive electrode material, good synergistic effects between the manganese-based positive electrode material and layered oxide positive electrode material can be achieved. The layered oxide positive electrode material uniformly distributed in the manganese-based positive electrode material can form a good ionic conductivity transmission network, significantly improving the ionic conductivity of the manganese-based positive electrode material. The manganese-based positive electrode material which is uniformly distributed provides a good coating effect on the layered oxide positive electrode material, thereby improving the overall safety performance and better enhancing the specific capacity, cycling performance, and safety performance of the positive electrode material.

In some embodiments, in the Type II electrode layer, the ratio of the areal density of the active material in the second active material layer to the areal density of the active material in the first active material layer is in a range of 0.01-100, for example, 0.01, 0.05, 1, 5, 10, 15, 20, 25, 30, 35, 40, 45, 50, 55, 60, 65, 70, 75, 80, 85, 90, 95, or 100, etc., particularly in a range of 0.1-15.

In the embodiments provided in the present disclosure, in the Type II electrode layer, keeping the ratio of the thickness of the active material in the second active material layer to the areal density of the active material in the first active material layer within the range of 0.1-15 is beneficial to fully leverage the good ionic conductivity of the layered oxide positive electrode material and the safety characteristics of the manganese-based positive electrode material, ensuring good specific capacity performance and long-cycle and safety performance of the electrode. When the areal density ratio exceeds the range of 0.1-15, maintaining good ionic conductivity of the layered oxide positive electrode material in the first active material layer becomes challenging, affecting the specific capacity and long-cycle performance of the active material. When the areal density ratio is below the range of 0.1-15, the second active material layer may not effectively coat and isolate the layered oxide positive electrode material in the first active material layer, affecting safety performance.

In some embodiments, in the Type II electrode layer, the ratio of the thickness of the second active material layer to the thickness of the first active material layer is in a range of 0.01-200, for example, 0.01, 0.05, 0.1, 0.5, 1, 5, 10, 15, 20, 25, 30, 35, 40, 45, 50, 55, 60, 65, 70, 75, 80, 85, 90, 95, 100, 110, 120, 130, 140, 150, 160, 170, 180, 190, or 200, etc., particularly in a range of 0.1-50.

In the embodiments provided in the present disclosure, in the Type II electrode layer, keeping the ratio of the thickness of the second active material layer to the thickness of the first active material layer within the range of 0.1-50 is beneficial to fully leverage the good ionic conductivity of the layered oxide positive electrode material and the safety characteristics of the manganese-based positive electrode material, ensuring good specific capacity performance and long-cycle and safety performance of the electrode. When the thickness ratio exceeds the range of 0.1-50, maintaining good ionic conductivity of the layered oxide positive electrode material in the first active material layer becomes challenging, affecting the specific capacity and long-cycle performance of the active material. When the thickness ratio is below the range of 0.1-50, the second active material layer may not effectively coat and isolate the layered oxide positive electrode material in the first active material layer, affecting safety performance.

In some embodiments, in the Type II electrode layer, a mass ratio of the manganese-based positive electrode material to the layered oxide positive electrode material in the second active material layer is in a range of 0.01-200:1, for example, 0.01:1, 0.05:1, 0.06:1, 0.1:1, 0.5:1, 1:1, 3:1, 5:1, 8:1, 10:1, 13:1, 15:1, 18:1, or 20:1, etc., particularly in a range of 0.05-20:1.

In the embodiments provided in the present disclosure, in the Type II electrode layer, when the mass ratio of the manganese-based positive electrode material to the layered oxide positive electrode material in the second active material layer is within the range of 0.05-20:1, better synergistic effects of the manganese-based positive electrode material and the layered oxide positive electrode material can be achieved, fully leveraging respective advantages. When the mass ratio is too large, i.e., too much manganese-based positive electrode material is added, the layered oxide positive electrode material in the second active material layer may be sparsely distributed, resulting in an incomplete ionic conduction network, affecting the ionic conductivity of the electrode. When the mass ratio is too small, the coating and isolating effect of the manganese-based positive electrode material on the layered oxide positive electrode material may be affected, thereby affecting the safety performance.

In some embodiments, the electrode layer is a Type III electrode layer. The active material in the first active material layer includes the layered oxide positive electrode material and the manganese-based positive electrode material, and the active material in the second active material layer includes the manganese-based positive electrode material and the layered oxide positive electrode material.

In the embodiments provided in the present disclosure, in the Type III electrode layer, each of the first active material layer and the second active material layer includes the manganese-based positive electrode material and the layered oxide positive electrode material. This electrode structure can achieve synergistic effects between the manganese-based positive electrode material and the layered oxide positive electrode material, fully leveraging respective advantages, thereby better improving electrochemical performance and safety performance of the active material. The first active material layer includes the layered oxide positive electrode material and the manganese-based positive electrode material. The layered oxide positive electrode material has good ionic conductivity, and uniform distribution of the layered oxide positive electrode material can improve the conductivity of the electrode and reduce ohmic impedance. The addition of manganese-based positive electrode material which is low-cost provides a coating and isolating effect on the layered oxide positive electrode material, improving the safety of the first active material layer and reducing raw material costs, offering significant cost advantages. Since the second active material layer includes both the manganese-based positive electrode material and the layered oxide positive electrode material, good synergistic effects between the manganese-based positive electrode material and the layered oxide positive electrode material can be achieved. The layered oxide positive electrode material uniformly distributed in the manganese-based positive electrode material can form a good ionic conductivity transmission network, significantly improving the ionic conductivity of the manganese-based positive electrode material. The manganese-based positive electrode material which is uniformly distributed provides a good coating effect on the layered oxide positive electrode material in both the first and second active material layers, thereby improving the overall safety performance and better enhancing the specific capacity, cycling performance, and safety performance of the positive electrode material.

In some embodiments, in the Type III electrode layer, the ratio of the areal density of the active material in the second active material layer to the areal density of the active material in the first active material layer is in a range of 0.01-80, for example, 0.01, 0.05, 1, 5, 10, 15, 20, 25, 30, 35, 40, 45, or 50, etc., particularly in a range of 0.1-25.

In the embodiments provided in the present disclosure, in the Type III electrode layer, maintaining the ratio of the areal density of the active material in the second active material layer to the areal density of the active material in the first active material layer within the range of 0.1-25 is beneficial to improve the electrochemical performance of the active material while considering safety performance. When the areal density ratio exceeds the range of 0.1-25, maintaining good ionic conductivity of the first active material layer may be challenging, affecting the specific capacity and long-cycle performance of the active material. When the areal density ratio is below the range of 0.1-25, the second active material layer may not effectively coat and isolate the layered oxide positive electrode material in the first active material layer, affecting safety performance.

In some embodiments, in the Type III electrode layer, the ratio of the thickness of the second active material layer to the thickness of the first active material layer is in a range of 0.01-200, for example, 0.01, 0.05, 0.1, 0.5, 1, 5, 10, 15, 20, 25, 30, 35, 40, 45, 50, 55, 60, 65, 70, 75, 80, 85, 90, 95, 100, 110, 120, 130, 140, 150, 160, 170, 180, 190, or 200, etc., particularly in a range of 0.1-40.

In the embodiments provided in the present disclosure, in the Type III electrode layer, keeping the ratio of the thickness of the second active material layer to the thickness of the first active material layer within the range of 0.1-40 is beneficial to improve the electrochemical performance of the active material while considering safety performance. When the thickness ratio exceeds the range of 0.1-40, maintaining good ionic conductivity of the layered oxide positive electrode material in the first active material layer may be challenging, affecting the specific capacity and long-cycle performance of the active material. When the ratio is below the range of 0.1-40, the second active material layer may not effectively coat and isolate the layered oxide positive electrode material in the first active material layer, affecting safety performance.

In some embodiments, in the Type III electrode layer, the mass ratio of the manganese-based positive electrode material to the layered oxide positive electrode material in the second active material layer is in a range of 0.01-200:1, for example, 0.01:1, 0.05:1, 0.1:1, 0.5:1, 1:1, 3:1, 5:1, 8:1, 10:1, 13:1, 15:1, 18:1, or 20:1, etc., particularly in a range of 0.05-20:1.

In some embodiments, in the Type III electrode layer, a mass percentage of the manganese-based positive electrode material in the active material of the second active material layer is greater than a mass percentage of the manganese-based positive electrode material in the active material of the first active material layer.

In the embodiments provided in the present disclosure, in the Type III electrode layer, distribution of the manganese-based positive electrode material in the second active material layer and distribution of the manganese-based positive electrode material in the first active material layer is directional, i.e., the mass percentage of the manganese-based positive electrode material in the active material of the first active material layer is lower than the mass percentage of the manganese-based positive electrode material in the active material of the second active material layer, which is more conducive to improving the ionic conductivity of the electrode, reducing impedance, and improving the electrochemical performance of the active material while considering the safety performance of the electrode. Furthermore, using a mixture of two active materials allows for directional setting of the ionic conductivity of the first active material layer and the second active material layer, optimizing kinetic characteristics of the first active material layer and the second active material layer, enabling the two-layer active substance system to have directionally designable kinetics, thereby improving the overall cycling performance of the battery. When an amount of the manganese-based positive electrode material added in the first active material layer is the same as an amount of the manganese-based positive electrode material added in the second active material layer, problems such as an increase in electrode ohmic impedance and polarization may occur, affecting the electrochemical performance of the active material. When it is completely the opposite, that is, the amount of the manganese-based positive electrode material added in the second active material layer is less than the amount of the manganese-based positive electrode material added in the first active material layer, good ionic conductivity of the layered oxide positive electrode material may be affected, making it impossible to solve the problem of poor ionic conductivity of lithium manganese iron phosphate material using only bare foil, and the cost advantage may also be lost.

It should be noted that the positive electrode sheet provided in the present disclosure can have electrode layers on both sides, and each electrode layer has the same structure, or the positive electrode sheet has one electrode layer only on one side. In addition to the active material, the active material layers in the electrode layer further includes a conductive agent and a binder, and a mass ratio of the conductive agent and a mass ratio of the binder are conventional technical means, i.e., the mass ratios commonly used in a preparation of battery positive electrode sheets, all of which are applicable to the present disclosure.

In a second aspect, the present disclosure provides a method for preparing the positive electrode sheet described in the first aspect. The method includes the following operations.

A slurry of a first active material layer and a slurry of a second active material layer are prepared, and at least one side of a current collector is coated with the slurry of the first active material layer and the slurry of the second active material layer to obtain the positive electrode sheet.

For the method provided in the present disclosure, the slurries can be prepared and coated based on the structure of the electrode layer of the positive electrode sheet provided in the first aspect. Coating of the two slurries can be done simultaneously, or can be done sequentially, for instance, first coating the slurry of the first active material layer and then the slurry of the second active material layer.

In a third aspect, the present disclosure further provides a lithium-ion battery. The lithium-ion battery includes the positive electrode sheet described in the first aspect.

Compared with the prior art, the present disclosure has the following beneficial effects.

The positive electrode sheet provided in the present disclosure saves costs, improves the electronic conductivity of manganese-based positive electrode material while synergistically cooperating with the layered oxide positive electrode material to enhance safety performance of the battery, improve the long-cycle performance of the battery, and fully leverage advantages of both the manganese-based positive electrode material and the layered oxide positive electrode material, making the charge/discharge curve smoother and facilitating BMS calculations.

After reading and understanding the detailed description, other aspects can be understood.

### DETAILED DESCRIPTION

In a specific embodiment, the present disclosure provides a method for preparing a slurry of an active material layer in a positive electrode sheet. The method includes the following operation.

An active material, conductive carbon black, and polyvinylidene fluoride are mixed in a mass ratio of 94:2:4 in NMP to obtain the slurry of the active material layer.

Methods and mass ratios of the active material layer slurry provided in the following examples and comparative examples were based on the method provided in the above-mentioned specific example, only changing a type of the active material.

### Examples 1-7

Each of the Examples 1-7 provided a positive electrode sheet, which included a current collector and an electrode layer located on a surface of the current collector. Specifically, the electrode layer was coated on both sides of the current collector, i.e., was obtained by double-sided coating, and the electrode layer on each side of the current collector had a same structure. The electrode layer consisted of a first active material layer and a second active material layer arranged in a stacked manner. The first active material layer was in direct contact with the surface of the current collector. An active material in the first active material layer, an active material in the second active material layer, a ratio of an areal density of the active material in the second active material layer to an areal density of the active material in the first active material layer, and a ratio of a thickness of the second active material layer to a thickness of the first active material layer are as shown in Table 1. The electrode layer is a Type I electrode layer.

The method for preparing the positive electrode sheet in each of the Examples 1-7 is as follows.

A slurry of the first active material layer and a slurry of the second active material layer were prepared based on the above-mentioned specific embodiment.

The slurry of the first active material layer was coated on both sides of an aluminum foil which was a bare foil, dried, and then the slurry of the second active material layer was coated on both sides of the coated aluminum foil, dried, and rolled to obtain the positive electrode sheet.

### Comparative Examples 1-3

Each of Comparative Examples 1-3 provided a positive electrode sheet. The positive electrode sheet included a current collector and an electrode layer located on a surface of the current collector. Specifically, the electrode layer was located on both sides of the current collector, i.e., was obtained by double-sided coating, and the electrode layer on each side of the current collector had a same structure. Types of active materials in the electrode layer are as shown in Table 1.

The method for preparing the positive electrode sheet in each of the Comparative Examples 1-3 is as follows.

A slurry of an active material layer was prepared based on the above-mentioned specific embodiment.

The slurry of the active material layer was coated on both sides of an aluminum foil which was a bare foil, dried, and rolled to obtain the positive electrode sheet.

**Table 1**

| | first active material layer | second active material layer | areal density ratio | thickness ratio |
|---|---|---|---|---|
| Ex. 1 | NCM811 | lithium manganese iron phosphate | 10 | 20 |
| Ex. 2 | NCM811 | lithium manganese iron phosphate | 0.1 | 0.1 |
| Ex. 3 | NCM811 | lithium manganese iron phosphate | 20 | 40 |
| Exy 4 | NCM811 | lithium manganese iron phosphate | 0.05 | 0.01 |
| Ex. 5 | NCM811 | lithium manganese iron phosphate | 25 | 50 |
| Ex. 6 | NCM811 | lithium manganese iron phosphate | 10 | 0.01 |
| Ex. 7 | NCM811 | lithium manganese iron phosphate | 10 | 50 |
| Comp. Ex. 1 | NCM811 | - | - | - |
| Comp. Ex. 2 | - | lithium manganese iron phosphate | - | - |
| Comp. Ex. 3 | NCM811+ lithium manganese iron phosphate (directly mixed into one layer) | | - | - |

The positive electrode sheets provided in Examples 1-7 and Comparative Examples 1-2 were rolled and cut into positive electrodes, and lithium sheets were used as negative electrodes to prepare button batteries.

The batteries provided in Examples 1-3 and Comparative Examples 1-3 were subjected to electrochemical performance testing under the following conditions. Specific capacity test: each battery was charged to 4.3V at 0.1C with a constant current and constant voltage, with a cutoff current of 0.02C, and then discharged to 2.5V at 0.1C, and the discharge specific capacity of the battery was calculated. Cycling test: the battery was charged to 4.3V at 1C with a constant current and constant voltage, with a cutoff current of 0.02C, and then discharged to 2.5V at 1C with a constant current, cycled 50 times, and capacity retention rate of the battery was compared and analyzed. Test results are listed in Table 2.

**Table 2**

| | specific capacity (mAh/g) | long-cycle performance (%) |
|---|---|---|
| Ex. 1 | 167.3 | 100.72 |
| Ex. 2 | 205.4 | 100.56 |
| Ex. 3 | 162.3 | 100.52 |
| Ex. 4 | 205.6 | 100.21 |
| Ex. 5 | 160.9 | 99.24 |
| Ex. 6 | 161.5 | 99.20 |
| Ex. 7 | 159.8 | 98.54 |
| Comp. Ex. 1 | 205.1 | 98.42 |
| Comp. Ex. 2 | 152.4 | 98.54 |
| Comp. Ex. 3 | 158.7 | 97.86 |

Combining Table 1 and Table 2, it can be seen that:
From the data results of Examples 1, 4 and 5, it can be seen that in the Type I electrode layer, when the areal density ratio, i.e., the ratio of the areal density of the active material in the second active material layer to the areal density of the active material in the first active material layer, is too low, the manganese-based positive electrode material may not effectively isolate and coat the layered oxide positive electrode, and cannot effectively inhibit corrosion of the layered oxide positive electrode material of the first active material layer by free acid in the electrolyte, leading to side reactions such as interface oxidation, thereby affecting overall cycling performance and safety performance. When the areal density ratio is too high, ionic conductivity may be decreased, which is not conducive to stability of electronic conductivity in later stages of cycling, thereby affecting overall cycling stability.

From the data results of Example 1 and Examples 6 and 7, it can be seen that in the Type I electrode layer, when the thickness ratio, i.e., the ratio of the thickness of the second active material layer to the thickness of the first active material layer, is too low, the manganese-based positive electrode material of the second active material layer may not effectively coat and isolate the layered oxide positive electrode material in the first active material layer, and cannot effectively inhibit interface oxidation of the layered oxide positive electrode material by the electrolyte, affecting safety performance and cycling performance. When the thickness ratio is too high, the layered oxide positive electrode material in the first material layer may not be able to fully exert ionic conductivity, affecting the specific capacity and long-cycle performance of the active material.

From the data results of Example 1 and Comparative Examples 1 and 2, it can be seen that when the active material of positive electrode sheet contains only the layered oxide positive electrode material or only the manganese-based positive electrode material, side reactions may not be effectively inhibited and electrode contact impedance may not be effectively reduced, thereby affecting cycling life and safety performance.

From results of Example 1 and Comparative Example 3, it can be seen that when the layered oxide positive electrode material and the manganese-based positive electrode material in the positive electrode sheet are mixed into one layer, and there is only one active material layer in the electrode sheet, the advantages of the layered oxide positive electrode material and the manganese-based positive electrode material cannot be fully utilized, affecting the overall specific capacity performance, cycling performance, and safety performance.

### Examples 8-16

Each of the Examples 8-16 provided a positive electrode sheet, which included a current collector and an electrode layer located on a surface of the current collector. Specifically, the electrode layer was coated on both sides of the current collector, i.e., was obtained by double-sided coating, and the electrode layer on each side of the current collector had a same structure. The electrode layer consisted of a first active material layer and a second active material layer arranged in a stacked manner. The first active material layer was in direct contact with the surface of the current collector. An active material in the first active material layer, an active material in the second active material layer, a ratio of an areal density of the active material in the second active material layer to an areal density of the active material in the first active material layer, a ratio of a thickness of the second active material layer to a thickness of the first active material layer, and a mass ratio of the manganese-based positive electrode material to the layered oxide positive electrode material in the second active material layer are as shown in Table 3. The electrode layer is a Type II electrode layer.

The method for preparing the positive electrode sheet in each of the Examples 8-16 is as follows.

A slurry of the first active material layer and a slurry of the second active material layer were prepared based on the above-mentioned specific embodiment.

The slurry of the first active material layer was coated on both sides of an aluminum foil which was a bare foil, dried, and then the slurry of the second active material layer was coated on both sides of the coated aluminum foil, dried, and rolled to obtain the positive electrode sheet.

**Table 3**

| | first active material layer | second active material layer | areal density ratio | thickness ratio | second active material layer |
|---|---|---|---|---|---|
| | | | | | mass ratio |
| Ex. 8 | NCM811 | NCM811 + lithium manganese iron phosphate | 8 | 30 | 10 |
| Ex. 9 | Li_{1.25}Ni_{0.34}Mn_{0.65}O₂ | lithium manganate + lithium manganese iron phosphate | 0.1 | 0.1 | 0.05 |
| Ex. 10 | NCM811 | NCM811+ lithium manganese iron phosphate | 15 | 50 | 20 |
| Ex. 11 | NCM811 | NCM811+ lithium manganese iron phosphate | 0.01 | 0.1 | 10 |
| Ex. 12 | NCM811 | NCM811+ lithium manganese iron phosphate | 50 | 30 | 10 |
| Ex. 13 | NCM811 | NCM811+ lithium manganese iron phosphate | 8 | 0.09 | 10 |
| Ex. 14 | NCM811 | NCM811+ lithium manganese iron phosphate | 8 | 80 | 10 |
| Ex. 15 | NCM811 | NCM811+ lithium manganese iron phosphate | 8 | 30 | 0.01 |
| Ex. 16 | NCM811 | NCM811+ lithium manganese iron phosphate | 8 | 30 | 30 |
| Comp. Ex. 1 | NCM811 | - | - | - | - |
| Comp. Ex. 2 | - | lithium manganese iron phosphate | - | - | - |
| Comp. Ex. 3 | NCM811+ lithium manganese iron phosphate | | - | - | 10 |

Examples 8-16 were prepared using the same method as Examples 1-7 to prepare button batteries.

The batteries provided in Examples 8-16 and Comparative Examples 1-3 were subjected to electrochemical performance testing under the same conditions as in the Type I electrode layer, and the results are shown in Table 4.

**Table 4**

| | specific capacity (mAh/g) | long-cycle performance (%) |
|---|---|---|
| Ex. 8 | 169.6 | 100.75 |
| Ex. 9 | 190.91 | 100.42 |
| Ex. 10 | 165.3 | 100.57 |
| Exr 11 | 207.5 | 100.34 |
| Ex. 12 | 163.4 | 100.23 |
| Ex. 13 | 167.6 | 100.12 |
| Ex. 14 | 167.2 | 100.05 |
| Ex. 15 | 206.5 | 99.87 |
| Ex. 16 | 165.0 | 99.42 |
| Comp. Ex. 1 | 205.1 | 98.42 |
| Comp. Ex. 2 | 152.4 | 98.54 |
| Comp. Ex. 3 | 161.2 | 97.52 |

Combining Tables 3 and 4, it can be seen that:
From the data results of Examples 8, 11 and 12, it can be seen that in the Type II electrode layer, when the areal density ratio is too low, the second active material layer may not effectively coat and isolate the layered oxide positive electrode material in the first active material layer, and the corrosion of the layered oxide positive electrode material in the first active material layer by free acid in the electrolyte cannot be effectively inhibited, affecting safety performance and cycling performance. When the areal density ratio is too high, maintaining good ionic conductivity of the layered oxide positive electrode material in the first active material layer becomes challenging, affecting the specific capacity and long-cycle performance of the active material.

From the data results of Examples 8, 13 and 14, it can be seen that in the Type II electrode layer, when the thickness ratio is too low, the second active material layer may not effectively coat and isolate the layered oxide positive electrode material in the first active material layer, affecting the overall safety performance and cycling performance. When the thickness ratio is too high, maintaining good ionic conductivity of the layered oxide positive electrode material in the first active material layer becomes challenging, affecting the specific capacity and long-cycle performance of the active material.

From the data results of Examples 8, 15 and 16, it can be seen that in the Type II electrode layer, when the mass ratio of the manganese-based positive electrode material to the layered oxide positive electrode material in the second active material layer is too low, the coating and isolating effect of the manganese-based positive electrode material on the layered oxide positive electrode material may be affected, and the corrosion of the layered oxide positive electrode material in the first active material layer by free acid in the electrolyte cannot be effectively inhibited, thereby affecting safety performance and cycling performance. When the mass ratio is too high, the layered oxide positive electrode material may be sparsely distributed in the second active material layer, resulting in an incomplete ionic conduction network, affecting the ionic conductivity of the electrode, thereby affecting the overall specific capacity performance and long-cycle performance.

From the data results of Example 8 and Comparative Examples 1 and 2, it can be seen that when the active material of the positive electrode sheet contains only the layered oxide positive electrode material or only the manganese-based positive electrode material, side reactions may not be effectively inhibited and electrode contact impedance may not be effectively reduced, thereby affecting specific capacity performance, cycling life, and safety performance.

From the data results of Example 8 and Comparative Example 3, it can be seen that when the layered oxide positive electrode material and the manganese-based positive electrode material in the positive electrode sheet are mixed into one layer, and there is only one active material layer in the electrode sheet, the advantages of the two materials cannot be fully utilized, affecting the overall specific capacity performance, cycling performance, and safety performance.

### Examples 17-25

Each of the Examples 17-25 provided a positive electrode sheet, which included a current collector and an electrode layer located on a surface of the current collector. Specifically, the electrode layer was coated on both sides of the current collector, i.e., was obtained by double-sided coating, and the electrode layer on each side of the current collector had a same structure. The electrode layer consisted of a first active material layer and a second active material layer arranged in a stacked manner. The first active material layer was in direct contact with the surface of the current collector. An active material in the first active material layer, an active material in the second active material layer, a ratio of an areal density of the active material in the second active material layer to an areal density of the active material in the first active material layer, a ratio of a thickness of the second active material layer to a thickness of the first active material layer, and a mass ratio of the manganese-based positive electrode material to the layered oxide positive electrode material in the second active material layer are as shown in Table 3. The electrode layer is a Type II electrode layer.

The method for preparing the positive electrode sheet in each of the Examples 8-16 is as follows.

A slurry of the first active material layer and a slurry of the second active material layer were prepared based on the above-mentioned specific embodiment.

The slurry of the first active material layer was coated on both sides of an aluminum foil which was a bare foil, dried, and then the slurry of the second active material layer was coated on both sides of the coated aluminum foil, dried, and rolled to obtain the positive electrode sheet.

**Table 5**

| | first active material layer | | second active material layer | | areal density ratio | thickness ratio |
|---|---|---|---|---|---|---|
| | active material | mass ratio | active material | mass ratio | | |
| Ex. 17 | NCM811+ lithium manganese iron phosphate | 5 | NCM811+ lithium manganese iron phosphate | 13 | 15 | 10 |
| Ex. 18 | Li_{1.25}Ni_{0.34}Mn_{0.65}O₂ + lithium manganese iron phosphate | 0.02 | Li_{1.25}Ni_{0.34}Mn_{0.65}O₂ + lithium manganese iron phosphate | 0.1 | 0.1 | 0.05 |
| Ex. 19 | NCM811+ lithium manganese iron phosphate | 15 | NCM811+ lithium manganese iron phosphate | 25 | 40 | 20 |
| Ex. 20 | NCM811+ lithium manganese iron phosphate | 5 | NCM811+ lithium manganese iron phosphate | 0.01 | 15 | 10 |
| Ex. 21 | NCM811+ lithium manganese iron phosphate | 5 | NCM811+ lithium manganese iron phosphate | 45 | 15 | 10 |
| Ex. 22 | NCM811+ lithium manganese iron phosphate | 5 | NCM811+ lithium manganese iron phosphate | 13 | 0.01 | 0.1 |
| Ex. 23 | NCM811+ lithium manganese iron phosphate | 5 | NCM811+ lithium manganese iron phosphate | 13 | 80 | 20 |
| Ex. 24 | NCM811+ lithium manganese iron phosphate | 5 | NCM811+ lithium manganese iron phosphate | 13 | 15 | 5 |
| Ex. 25 | NCM811+ lithium manganese iron phosphate | 5 | NCM811+ lithium manganese iron phosphate | 13 | 15 | 1 |
| Comp. Ex. 1 | NCM811 | - | - | - | - | - |
| Comp. Ex. 2 | - | - | lithium manganese iron phosphate | - | - | - |
| Comp. Ex. 3 | NCM811+ lithium manganese iron phosphate | | | | - | - |

Examples 17-25 were prepared using the same method as Examples 1-7 to prepare button batteries.

The batteries provided in Examples 8-16 and Comparative Examples 1-3 were subjected to electrochemical performance testing under the same conditions as in the Type I electrode layer, and the results are shown in Table 6.

**Table 6**

| | specific capacity (mAh/g) | long-cycle performance (%) |
|---|---|---|
| Ex. 17 | 168.3 | 100.67 |
| Ex. 18 | 193.25 | 100.31 |
| Ex. 19 | 162.4 | 100.47 |
| Ex. 20 | 167.3 | 100.24 |
| Ex. 21 | 163.6 | 100.35 |
| Ex. 22 | 200.8 | 99.87 |
| Ex. 23 | 161.8 | 99.65 |
| Ex. 24 | 164.8 | 99.32 |
| Ex. 25 | 165.8 | 98.71 |
| Comp. Ex. 1 | 205.1 | 98.42 |
| Comp. Ex. 2 | 152.4 | 98.54 |
| Comp. Ex. 3 | 159.7 | 97.86 |

Combining Tables 5-6, it can be seen that:
From the data results of Examples 17, 20 and 21, it can be seen that in the Type III electrode layer, when the areal density ratio is too low, the second active material layer may not effectively coat and isolate the layered oxide positive electrode material in the first active material layer, causing the layered oxide material to more easily transform into a Ni-O layer during charge/discharge. The formed Ni-O rock salt phase has no electrochemical activity and ionic conductivity, which may enhance kinetic barrier for lithium-ion diffusion, leading to increased battery impedance and decreased electrochemical performance, thereby affecting the overall safety performance and cycling performance. When the areal density ratio is too high, maintaining good ionic conductivity of the first active material layer may be challenging, reducing kinetic characteristics, thereby affecting the specific capacity and long-cycle performance of the active material.

From the data results of Examples 17, 22 and 23, it can be seen that in the Type III electrode layer, when the thickness ratio is too low, the second active material layer may not effectively coat and isolate the layered oxide positive electrode material in the first active material layer, and the interface oxidation of the layered oxide posit cannot be effectively inhibited, affecting safety performance and cycling performance. When the thickness ratio is too high, maintaining good ionic conductivity of the layered oxide positive electrode material in the first active material layer may be challenging, reducing kinetic characteristics, thereby affecting the specific capacity and long-cycle performance of the active material.

From the data results of Examples 17, 24 and 25, it can be seen that in the Type III electrode layer, when a mass percentage of the manganese-based positive electrode material in the second active material layer is the same as a mass percentage of the manganese-based positive electrode material in the first active material layer, electrode ohmic impedance and polarization may be increased, and phase transition of the layered oxide in the second layer may be exacerbated, strengthening the kinetic barrier for lithium-ion diffusion, leading to increased battery impedance and decreased electrochemical performance, thereby affecting the overall safety performance and cycling performance. When the mass percentage of the manganese-based positive electrode material in the second active material layer is less than the mass percentage of the manganese-based positive electrode material in the first active material layer, good ionic conductivity of the layered oxide positive electrode material may be affected, reducing the kinetic characteristics, making it impossible to solve the problem of poor ionic conductivity of lithium manganese iron phosphate material using only the bare foil, and the cost advantage may also be lost.

From the data results of Example 17 and Comparative Examples 1 and 2, it can be seen that when the active material of the positive electrode sheet contains only the layered oxide positive electrode material or only the manganese-based positive electrode material, side reactions cannot be effectively inhibited and electrode contact impedance cannot be effectively reduced, thereby affecting the specific capacity performance, cycling life, and safety performance.

From the data results of Example 17 and Comparative Example 3, it can be seen that when the layered oxide positive electrode material and the manganese-based positive electrode material in the positive electrode sheet are mixed into one layer, and there is only one active material layer in the electrode sheet, the advantages of the two materials cannot be fully utilized, affecting the overall specific capacity performance, cycling performance, and safety performance.

In summary, the positive electrode sheet provided in the present disclosure does not require the use of carbon-coated aluminum foil, saving costs, improves the electronic conductivity of the manganese-based positive electrode material, and synergistically cooperates with the layered oxide positive electrode material to enhance the safety performance of the battery, improve the long-cycle performance of the battery, and fully leverage the advantages of both the manganese-based positive electrode material and the layered oxide positive electrode material, making the charge/discharge curve smoother and facilitating BMS calculations.

## Claims

1. A positive electrode sheet, comprising a current collector and an electrode layer arranged on at least one side of the current collector;
wherein the electrode layer comprises at least a first active material layer and a second active material layer which are arranged in a stacked manner, the first active material layer is in direct contact with a surface of the current collector, an active material in the first active material layer comprises a layered oxide positive electrode material, and an active material in the second active material layer comprises a manganese-based positive electrode material.

2. The positive electrode sheet as claimed in claim 1, wherein the current collector comprises a bare foil and a coating on a surface of the bare foil;
the coating comprises a carbon coating layer, and a material in the carbon coating layer comprises at least one selected from the group consisting of conductive carbon black, graphene, and carbon nanotubes;
the layered oxide positive electrode material comprises at least one of a material with a chemical formula of LiₐNiₓCo_{y}M_{1-x-y}O₂ and a material with a chemical formula of zLi₂MnO₃·(1-z)LiBO₂, wherein M comprises at least one selected from the group consisting of Al, Mn, Fe, Cu, Zn, Zr, Mg, W, V, Nb, Sr, K, Na, and Ti, 1≤a≤2, 0.2≤x≤1, 0≤y<1, B comprises at least one selected from the group consisting of Mn, Ni, and Co, and 0<z<1;
D50 of the layered oxide positive electrode material is in a range of 1 µm-30 µm; the manganese-based positive electrode material comprises at least one selected from the group consisting of LiMnₓFe_{y}A_{(1-x-y)}PO₄, zLi₂MnO₃·(1-z)LiCO₂, and LiMn₂O₄, wherein 0≤x≤1, 0≤y≤1, A comprises at least one selected from the group consisting of Al, Cu, Zn, Zr, Mg, W, V, Nb, Sr, K, Na, Ti, Y, S, F, N, and Cl, C comprises at least one selected from the group consisting of Mn, Ni, and Co, and 0<z<1.

3. The positive electrode sheet as claimed in claim 1, wherein the electrode layer is a Type I electrode layer, the active material in the first active material layer is the layered oxide positive electrode material, and the active material in the second active material layer is the manganese-based positive electrode material.

4. The positive electrode sheet as claimed in claim 2, wherein the electrode layer is a Type I electrode layer, the active material in the first active material layer is the layered oxide positive electrode material, and the active material in the second active material layer is the manganese-based positive electrode material.

5. The positive electrode sheet as claimed in claim 3, wherein in the Type I electrode layer, a ratio of an areal density of the active material in the second active material layer to an areal density of the active material in the first active material layer is in a range of 0.01-100, or in a range of 0.1-20;
in the Type I electrode layer, a ratio of a thickness of the second active material layer to a thickness of the first active material layer is in a range of 0.01-200, or in a range of 0.1-40;
in the Type I electrode layer, a ratio of a specific surface area BET2 of the active material in the second active material layer to a specific surface area BET1 of the active material in the first active material layer satisfies 0.01≤BET2/BET1≤150, or 2.1≤BET2/BET1≤60.

6. The positive electrode sheet as claimed in claim 1, wherein the electrode layer is a Type II electrode layer, the active material in the first active material layer comprises the layered oxide positive electrode material, and the active material in the second active material layer comprises the manganese-based positive electrode material and the layered oxide positive electrode material.

7. The positive electrode sheet as claimed in claim 2, wherein the electrode layer is a Type II electrode layer, the active material in the first active material layer comprises the layered oxide positive electrode material, and the active material in the second active material layer comprises the manganese-based positive electrode material and the layered oxide positive electrode material.

8. The positive electrode sheet as claimed in claim 6, wherein in the Type II electrode layer, a ratio of an areal density of the active material in the second active material layer to an areal density of the active material in the first active material layer is in a range of 0.01-100, or in a range of 0.1-15.
in the Type II electrode layer, a ratio of a thickness of the second active material layer to a thickness of the first active material layer is in a range of 0.01-200, or in a range of 0.1-50;
in the Type II electrode layer, a mass ratio of the manganese-based positive electrode material to the layered oxide positive electrode material in the second active material layer is in a range of 0.01-200:1, or in a range of 0.05-20:1.

9. The positive electrode sheet as claimed in claim 1, wherein the electrode layer is a Type III electrode layer, the active material in the first active material layer comprises the layered oxide positive electrode material and the manganese-based positive electrode material, and the active material in the second active material layer comprises the manganese-based positive electrode material and the layered oxide positive electrode material.

10. The positive electrode sheet as claimed in claim 2, wherein the electrode layer is a Type III electrode layer, the active material in the first active material layer comprises the layered oxide positive electrode material and the manganese-based positive electrode material, and the active material in the second active material layer comprises the manganese-based positive electrode material and the layered oxide positive electrode material.

11. The positive electrode sheet as claimed in claim 9, wherein in the Type III electrode layer, a ratio of an areal density of the active material in the second active material layer to an areal density of the active material in the first active material layer is in a range of 0.01-80, or in a range of 0.1-25;
in the Type III electrode layer, a ratio of a thickness of the second active material layer to a thickness of the first active material layer is in a range of 0.01-200, or in a range of 0.1-40;
in the Type III electrode layer, a mass ratio of the manganese-based positive electrode material to the layered oxide positive electrode material in the second active material layer is in a range of 0.01-200:1, or in a range of 0.05-20:1;
in the Type III electrode layer, a mass percentage of the manganese-based positive electrode material in the active material of the second active material layer is greater than a mass percentage of the manganese-based positive electrode material in the active material of the first active material layer.

12. A method for preparing the positive electrode sheet as claimed in any one of the claims 1-11, comprising:
preparing a slurry of a first active material layer and a slurry of a second active material layer; and
coating at least one side of a current collector with the slurry of the first active material layer and the slurry of the second active material layer to obtain the positive electrode sheet.

13. A lithium-ion battery, comprising the positive electrode sheet as claimed in any one of the claims 1-11.
